# EUROPEAN PATENT APPLICATION

(11) **EP 2 007 120 A1**
(43) Date of publication of application: **24.12.2008**
(21) Application number: 07460013.1
(22) Date of filing: 19.06.2007
(51) Int. Cl.: H04M 1/60, B60R 11/02

(54) **Universal electronic device with a hands-free module and/or a GPS navigation system and a Bluetooth module, especially for automobile vehicles**

(71) Applicant: Bury Sp.z.o.o, 39 300 Mielec (PL)
(72) Inventor: BURY, Henryk, 39-300 Mielec (PL)
(74) Representative: Kaminski, Zbigniew

(57) **Abstract**

A universal device electronic device with a hands-free module and/or a GPS navigation system and a Bluetooth module, especially for automobile vehicles with a hands-free module, a GPS navigation system and a Bluetooth module; the said device provided with a casing (2) comprising a base (4) and a tiltable part (6), connected to the base by means of a hinge (5,5a) with a release button (18), the said base (4) including a speaker (9) of the hands-free module and a battery (10), as an independent power source, and the said tiltable part (6) of the casing (2) provided with a LCD display (7) and the microphone (17) of the hands-free module.

## Description

This invention relates to a universal device electronic device with a hands-free module and/or a GPS navigation system and a Bluetooth module, especially for automobile vehicles. The device is provided with a casing, which encloses the known hands-free module and the known GPS navigation system connected to the Bluetooth module.

The US patent No. US 5 308 247 discloses an electronic device and/or a rear view mirror fixed directly to the windshield with an adhesive. Similar solution is known from the German document DE 10 211 444 A1, where various electronic modules are fixed directly to the windshield or to the side fairings with an adhesive. In order to strengthen the mounts an additional plastic handle, reinforced with glass fibre, is provided.

The American patent No. US 2003/0068986 A1 describes a mobile phone car kit having a body with a slot to receive the mobile phone, the first holder to secure a lower part of the mobile phone, a second holder to elastically secure an upper part of the mobile phone to lock or release the upper part of the mobile device, a lock/release element movable between a locking position and a releasing position, an ejector to lift the mobile phone to a given distance when the lock/release is moved to the releasing position, and a mounting fixture including position adjusting units to adjust an angle and a height of the main body and fixing units to fix the position of the adjusting unit in the vehicle. Since the apparatus has the lock/release and the ejector to automatically lock and release the mobile device and the mounting fixture to adjust the position of the main body, it is possible to lock and release the mobile phone and to set up the apparatus and the mobile phone in the vicinity of the window of the vehicle to facilitate GPS satellite transmission.

The PCT published international application NO. WO 2005/029825 A1 presents a hands-free mobile phone car kit provided with a wireless Bluetooth connection to the headphones and equipped with a passive communication module with a speaker and a microphone, or connected to an amplifier located in the casing, on which external surface there is provided a slot, into which the headphones having an electric connection to the communication unit can be inserted. The casing has also a connection with a plug for a 12V-socket, e.g. a lighter socket. The headphone set, equipped with a digital signal processor, which includes a wireless Bluetooth module with a background noise reduction system, is connected to the communication module so that it can adjust to the voltage at the communication module. Thanks to a switching circuit it is possible to adapt the headphones' digital signal processor and the control buttons to operate with the speaker and the microphone of the communication module. In this way a simple hands-free car kit is made, consisting of a few simple components. All the headphone modules and components can operate with the speaker and the microphone of the communication module. All similar electric devices for mechanical vehicles are specialized devices such as mobile phones, Bluetooth modules of hands-free kits, etc.

The object of this invention is to provide a design of an universal electronic device, which includes various electronic modules of different purposes, especially a hands-free module, a Bluetooth module and/or a GPS navigation device.

According to the invention, the device shall have a compact design, be portable, mountable to the windshield of a mechanical vehicle and suitable for use outside the vehicle (a so-called portable device).

According, to the invention, there is provided a universal electronic device with a hands-free module and/or a GPS navigation system and a Bluetooth module, especially for automobile vehicles, which can be characterized in that it has a casing comprising a base and a tiltable part, connected to the base by means of a hinge with a release button, the said base including a speaker of the hands-free module and a battery, as an independent power source, and the said tiltable part provided with a LCD display and the microphone of the hands-free module.

The LCD display, according to the invention, built in the tiltable part of the casing is favourably both a GPS display and a display to show the commands executed by the device. This is a touch-pad display wherein the functions of the device can be initiated by touch.

The LCD display is located on the external or internal, or both surfaces of the tiltable part of the casing.

On its external surface, the tiltable part of the casing, according to the invention, is favourably provided with the buttons, which activate and deactivate the functions executed by the device.

The base of the casing, according to the invention, is favourably a resonant chamber for the speaker of the hands-free module.

On its external surface the base of the casing is favourably provided with a solar charger to charge the battery.

The device, according to the invention, is favourably provided with a holder, fixed permanently to the windshield of a vehicle, and side buttons with protrusions engaging with the slots in the base of the casing.

The device, according to the invention, is favourably provided with a connecting element, which engages with the slot in the holder.

When compared to other devices of such type, known in the state-of-the-art, the device according to the invention, demonstrates not only its multi-functionality but also other benefits, namely, it is portable, easy to mount into the holder fixed to the windshield of a vehicle, easy to release from the said holder and to be put on the dashboard or outside the vehicle, e.g. on the desk.

In this case the device can be connected to a PC. Moreover, the device is favourably provided with its own power source, independent from external power sources. This eliminates the need to provide electric cables to the device.

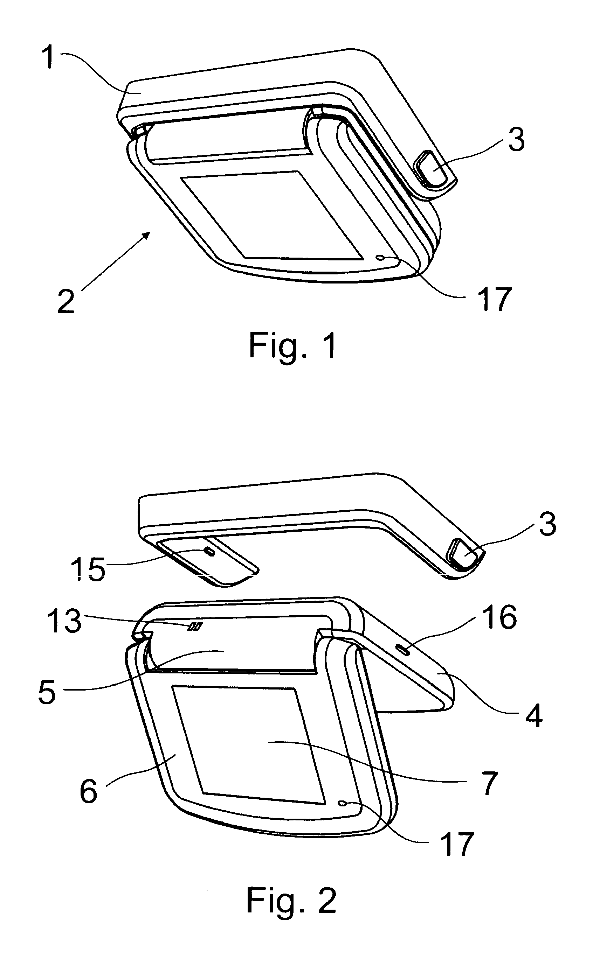

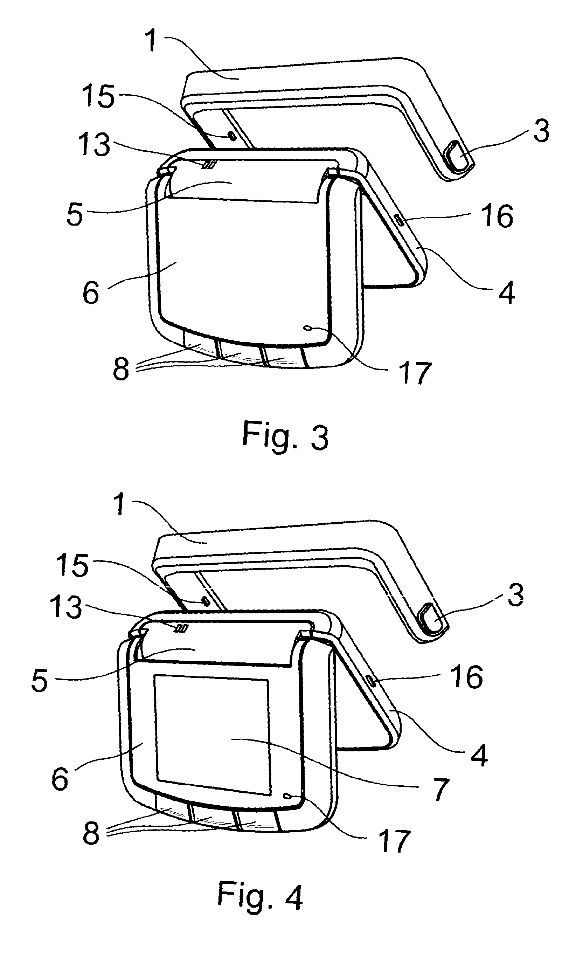

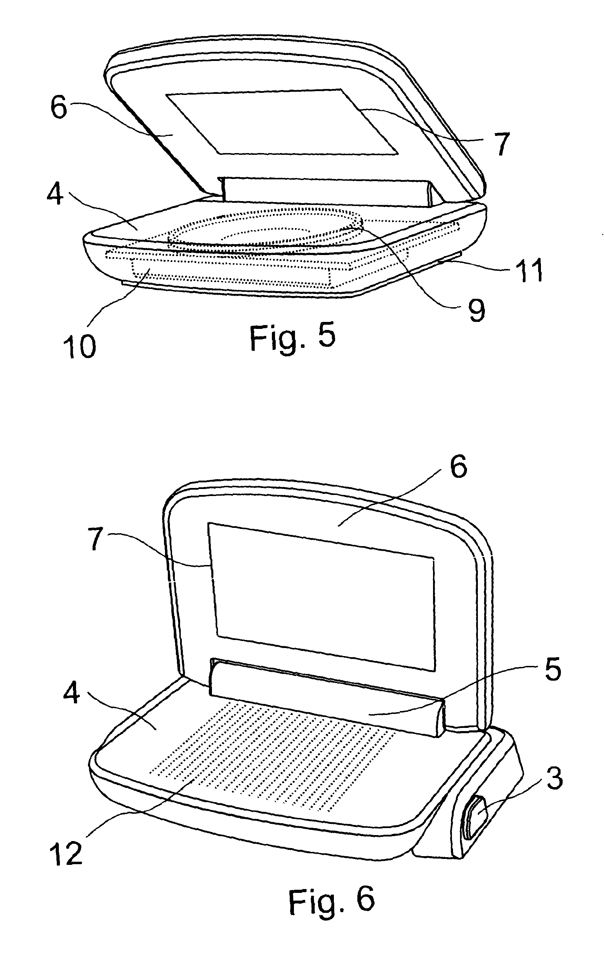

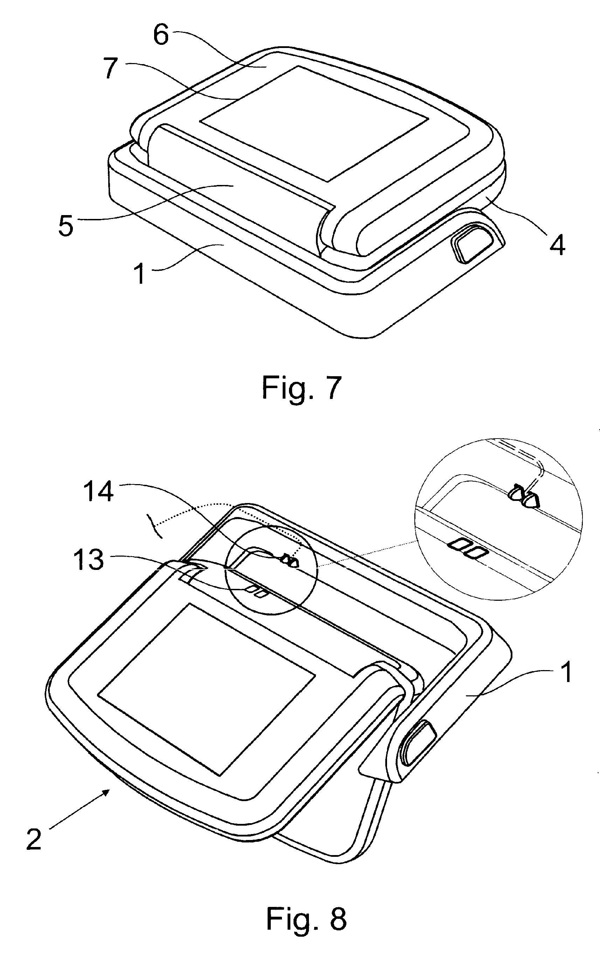

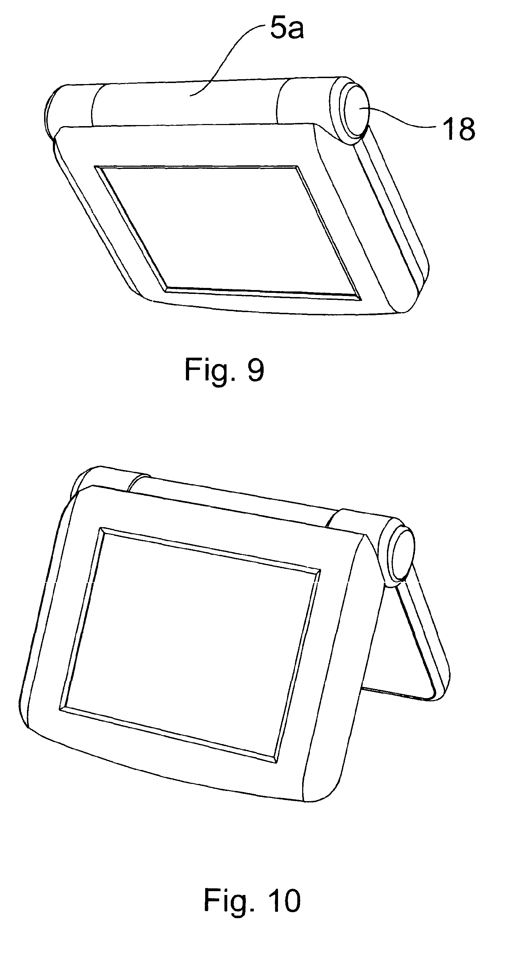

The universal electronic device with a hands-free module and/or a GPS navigation system and a Bluetooth module, especially for automobile vehicles, according to the invention, is depicted on the figures, where: Fig. 1 - shows the holder fixed to the windshield of the vehicle with the universal electronic device mounted to it, in a closed position; Fig. 2 - shows the said device released from the holder, in a half-open position; Fig. 3 - shows an optional version of the universal electronic device, according to the invention, provided with control buttons; Fig. 4 - shows another optional version of the universal electronic device, according to the Fig. 3, provided with a LCD display; Fig. 5 - shows an optional version of the universal electronic device in a half-open position with the speaker of the hands-free module made visible; Fig. 6 - shows the device as per the Fig. 5 mounted to the holder, in an open position; Fig. 7 - shows the device as per the Fig. 6 in a closed position, a back view; Fig. 8 - shows the device with the holder, according to the invention, with the electric connection to connect it to the electronic system of the vehicle; Fig. 9 - shows an optional version of the device, according to the invention, with the hinge and the button; Fig. 10 - shows the device as per the Fig. 9 in a half-open position.

The universal electronic device, according to the invention, as shown on the Fig. 1 and Fig. 2 consists of the holder 1, fixed permanently to the windshield of a vehicle and the casing 2 mounted detachably to the said holder. The holder is provided with side buttons 3, which are used to release the device and remove it from the holder. The casing 2 is bipartite and consists of the base 4 and the tiltable part 6 connected to the base with an articulated joint by means of a hinge 5.

Inside both parts 4 and 6 of the casing 2 there are the following electronic modules: the known hands-free module, the Bluetooth module and/or the known GPS navigation system, all the said modules coupled with each other, the LCD display 7 located on the external or internal surface of the tiltable part 6 of the casing 2.

In the optional version of the device, as depicted on the Fig. 3 and Fig. 4, there are control buttons 8 on the external surface of the tiltable part 6 to control both electronic systems of the device. In case of the embodiment as depicted on the Fig. 1 and Fig. 2 the control is performed by touching the LCD display 7 in a proper place. In case of the embodiment as per the Fig. 5 the speaker 9 of the hands-free module is depicted in the base 4 of the casing 2 and the battery 10 to provide power supply for the entire device.

A solar charger 11 is conveniently located under the battery 10 to enable charging the device with solar energy.

The LCD display is located on the external or internal surface of the tilting part 6 and is used both to show the GPS map and to control the operation of the device. In this mode appropriate control buttons are depicted on the display. Pressing a button activates the corresponding function of the device. The GPS antenna may be located inside the holder 1 or attached to it by means of a suitable socket. Moreover, the device itself may be equipped with a GPS antenna located within the casing 2.

On the internal surface of the base 4 of the casing 2, as depicted on the Fig. 6 there is a shield 12 of the speaker 9 and the LCD display 7, located on the internal surface of the tiltable part 6 of the casing 2.

In the embodiment, as per Fig. 7, the LCD display 7 is located on the external surface of the tiltable part 6 of the casing 2.

An exemplary embodiment of the device, as per the Fig. 8, is additionally provided with the connecting elements 13 engaging with the socket 14 located on the internal surface of the holder 1. In an enlarged view of the device the connecting element 13 of the device is in the asdisconnected position.

The holder 1 of the device, favourably fixed directly to the windshield is provided with side spring-loaded buttons 3, which control the protrusions 15 engaging with the corresponding slots 16 in the base 4 of the casing 2. Mounting the device, according to the invention, within a vehicle is executed by pressing the base 4 of the casing 2 into the holder 1.

Individual electronic modules of the device, according to the invention, are automatically activated after lifting the tiltable part 6 of the casing 2. In an alternative solution these buttons can be activated one by one using the control buttons 8 or the relevant buttons showed on the LCD display 7.

The battery 10 of the device, according to the invention, may be charged directly by an external vehicle's system through the connecting elements 13, 14 or directly by means of a solar charger 11 built-in in the device.

The device can operate properly both as-locked in the holder 1, and after removing the holder and putting it on the dashboard of a vehicle or removing it from the vehicle and putting it on the desk. After being moved the device, according to the invention, may communicate with a PC by means of the Bluetooth module

The device is also equipped with the microphone 17 connected to the hands-free module.

Favourably, the base 4 of the casing 2 is a resonant chamber for the speaker 9, thus improving its effectiveness.

Another embodiment, as depicted on the Fig. 9 and Fig. 10, the base 4 and the tiltable part 6 are connected with a sleeve-type hinge 5a, wherein there is the release button 18 engaging with a spring not depicted on the drawing. Pressing the release button 18 facilitates lifting and changing the position of the tiltable part 6 in relation to the base 4. Leaving the buttons not pressed blocks the position of both parts of the casing.

Thanks to a compact design and own source of the power supply the device, according to the invention, is portable and may be used as a universal multimedia device, e.g. a hand-free kit for conferences or in tourism.

### References

- 1.: holder
- 2.: casing
- 3.: spring-loaded buttons
- 4.: base
- 5,5a.: hinge
- 6.: tiltable part
- 7.: LCD display
- 8.: control buttons
- 9.: speaker
- 10.: battery
- 11.: solar charger
- 12.: speaker shield
- 13.: connecting element
- 14.: socket
- 15.: protrusions in the holder
- 16.: slots
- 17.: microphone
- 18.: release button

## Claims

1. A universal device electronic device with a hands-free module and/or a GPS navigation system and a Bluetooth module, especially for automobile vehicles, provided with a casing enclosing a hands-free module, a GPS navigation system and a Bluetooth module, **characterized in that** it is provided with the casing (2) comprising a base (4) and a tiltable part (6), connected to the base by means of a hinge (5,5a) with a release button (18), the said base (4) including a speaker (9) of the hands-free module and a battery (10), as an independent power source, and the said tiltable part (6) of the casing (2) provided with a LCD display (7) and the microphone (17) of the hands-free module.

2. A device according to the Claim 1, **characterized in that** the LCD display (7), built in the tiltable part (6) of the casing (2) is favourably both a GPS display and a display to show the commands executed by the device.

3. A device according to the Claim 2, **characterized in that** its LCD display (7) is provided with a touch-pad display to enable to initiate the functions of the device by touch.

4. A device according to the Claim 2, **characterized in that** its LCD display (7) is located on the external or internal, or both surfaces of the tiltable part (6) of the casing (2).

5. A device according to the Claim 1, **characterized in that** the tiltable part (6) of the casing (2), on its external surface, is provided with the buttons (8), which activate and deactivate the functions executed by the device.

6. A device according to the Claim 1, **characterized in that** the base (4) of the casing (2) is a resonant chamber for the speaker (9) of the hands-free module.

7. A device according to the Claim 1, **characterized in that** the base (4) of the casing (2), on its external surface, is provided with a solar charger (11) to charge the battery.

8. A device according to the Claim 1, **characterized in that** it is provided with a holder (1), fixed permanently to the windshield of a vehicle, and provided with the side buttons (3) with protrusions (15), engaging with the slots (16) in the base (4) of the casing (2).

9. A device according to the Claim 1, **characterized in that** it is provided with a connecting element (13), which engages with the slot (14) in the holder (1).

## Amended claims

### Amended claims in accordance with Rule 137(2) EPC.

**1.** An electronic device with a hands-free module and/or a GPS navigation system and a Bluetooth module for automobile vehicles, provided with a casing **(2)** enclosing a hands-free module with a microphone and a speaker, a GPS navigation system, a Bluetooth module, a LCD display and a battery, **characterized in that** the casing **(2)** is bipartite and comprises a base **(4)** and a tiltable part **(6)** connected to the base **(4)** by means of a hinge **(5, 5a)** with a release button **(18),** wherein the speaker **(9)** of the hands-free module and the battery **(10)** as an independent power source are included in the base **(4),** while the LCD display **(7)** and the microphone **(17)** of the hands-free module are included in the tiltable part **(6)** of the casing **(2)**, and wherein the base **(4)** of the casing **(2)** is a resonant chamber for the speaker **(9)** of the hands-free module.

**2.** A device according to the Claim 1, **characterized in that** the LCD display **(7)**, built in the tiltable part **(6)** of the casing **(2)**, is both a GPS display and a display to show the commands executed by the device.

**3.** A device according to the Claim 2, **characterized in that** its LCD display (7) is provided with a touch-pad display to enable to initiate the functions of the device by touch.

**4.** A device according to the Claim 2, **characterized in that** its LCD display **(7)** is located on the external or internal, or both surfaces of the tiltable part **(6)** of the casing **(2)**.

**5.** A device according to the Claim 1, **characterized in that** the tiltable part **(6)** of the casing **(2)** is provided on its external surface with buttons **(8),** which activate and deactivate the functions executed by the device.

**6.** A device according to the Claim 1, **characterized in that** the base **(4)** of the casing **(2)** is provided on its external surface with a solar charger **(11)** to charge the battery.

**7.** A device according to the Claim 1, **characterized in that** it is provided with electrical connecting elements **(13)**, which engage with electrical connecting elements **(14)** of a holder **(1)**.
